# EUROPÄISCHE PATENTSCHRIFT

(11) **EP 1 240 443 B1**
(45) Veröffentlichungstag und Bekanntmachung des Hinweises auf die Patenterteilung: **02.04.2003**
(21) Anmeldenummer: 00987118.7
(22) Anmeldetag: 10.11.2000
(51) Int. Cl.: F16H 37/10

(54) **GETRIEBE, INSBESONDERE FÜR WINDKRAFTANLAGEN**
TRANSMISSION, ESPECIALLY FOR WIND POWER INSTALLATIONS
TRANSMISSION, NOTAMMENT DESTINEE AUX CENTRALES EOLIENNES

(30) Priorität: 23.12.1999 DE 19963597
(43) Veröffentlichungstag der Anmeldung: 18.09.2002
(73) Patentinhaber: Lohmann & Stolterfoht GmbH, 58455 Witten (DE)
(72) Erfinder: BAUER, Gerhard, 58453 Witten (DE); BERGER, Günter, 44577 Castrop-Frohlinde (DE)
(74) Vertreter: Maiwald Patentanwalts GmbH
(86) Internationale Anmeldenummer: DE0003966
(87) Internationale Veröffentlichungsnummer: WO01050038

(56) Entgegenhaltungen:
- WO-A-96/11338
- DE-A- 2 841 330
- DE-B- 1 206 254
- US-A- 4 730 788

## Beschreibung

Die Erfindung betrifft ein Getriebe, insbesondere für Windkraftanlagen, gemäß dem Oberbegriff der Ansprüche 1, 6 und 9, wie es aus DE-A-2 841 330 bekannt ist.

Bei einer Windkraftanlage ist gewöhnlich im Kraftfluß zwischen einem die Windenergie in eine Drehbewegung umsetzenden Rotor und einem die Drehbewegung in elektrische Energie umwandelnden Generator ein Getriebe mit einer Übersetzung ins Schnelle angeordnet. Da die Baugruppen der Windenergieanlage meist innerhalb einer Kapsel an der Spitze eines Turmes angeordnet werden, sind möglichst kleinbauende Getriebe mit geringer Masse wünschenswert. Diese Forderung steht im Zielkonflikt mit dem Trend nach immer größeren Windkraftanlagen höherer Leistung, der unter anderem auch leistungsfähigere, sprich schwererer Getriebe bedarf.

Ein kleinbauendes Getriebe mit demzufolge recht geringem Gewicht ist aus der WO 96/11338 bekannt. Der gewichtssparende Kleinbau wird hier über eine Reihenschaltung zweier Planetengetriebestufen realisiert. Der Planetenträger des ersten antriebsseitigen Planetengetriebes ist unter Bildung der Antriebswelle für das Getriebe mit dem Rotor verbunden. Das Hohlrad des ersten Planetengetriebes ist gehäusefest angeordnet und das abtriebsseitige Sonnenrad ist mit einem eingangsseitigen Planetenträger des zweiten Planetengetriebes verbunden, dessen Hohlrad ebenfalls gehäusefest angeordnet ist und dessen Sonnenrad den Abtrieb des gesamten Getriebes bildet. Diese Reihenschaltung zweier Planetengetriebestufen weist jedoch den Nachteil auf, dass für größer dimensionierte Windkraftanlagen - insbesondere über 2 Megawatt - die Außenabmaße des Getriebes selbst bei Verwendung einer Planetengetriebeanordnung zu groß werden. Damit einhergehend gelangt auch die Masse zu einer kritischen Größe.

Eine alternative Art von allgemein bekannten Getrieben der hier interessierenden Art besteht aus einer antriebsseitigen - mit dem Rotor in Verbindung stehenden - Planetengetriebestufe, welcher im Unterschied zum vorstehenden Stand der Technik mindestens eine Getriebestufe in Stirnradausführung anstelle einer zweiten Planetengetriebestufe nachgeschaltet ist, um eine weitere Übersetzung der Drehzahl des Rotors in eine schnelle Drehzahl für den Generator zu realisieren. Da bei dieser Bauform wegen der Moment-Drehzahl-Verhältnisse ebenfalls die antriebsseitige Planetengetriebestufe die geometrischen Abmaße des gesamten Getriebes bestimmt, bestehen auch hier die Probleme hinsichtlich der Abmaße und einer damit in Zusammenhang stehenden großen Masse.

Um das vorstehend aufgezeigte Problem zu bewältigen ist bereits versucht worden, durch eine Leistungsverzweigung in der antriebsseitigen Getriebestufe die äußeren Abmaße des Getriebes - insbesondere den Durchmesser - und damit einhergehend die Masse insgesamt zu reduzieren. Zur Leistungsverzweigung besteht die antriebsseitige Planetenstufe aus mindestens zwei parallelgeschalteten kleineren Planetengetrieben. Um zwischen beiden Planetengetrieben einen verzweigungsbedingten Drehmomentenausgleich herbeizuführen, d. h. um eine definierte Leistungsaufteilung zwischen beiden Planetengetrieben zu erzielen, ist versucht worden, relative Drehbewegungen der abtriebsseitigen Getriebebestandteile der Planetenstufe durch eine Schrägverzahnung der in Eingriff stehenden Zahnräder auszugleichen. Der Ausgleich erfolgt über eine entgegengerichtete Schrägverzahnung von parallel geschalteten Zahnrädern des ersten und zweiten Planetengetriebes der antriebsseitigen Planetenstufe. In der Praxis hat sich gezeigt, daß hierdurch gleichwohl störende Relativbewegungen der Planetenräder bewirkt werden, wobei eine große Anzahl von Eingriffpunkten der an der Kraftübertragung beteiligten Zahnräder der Planentengetriebe zu den ständigen axialen Relativbewegungen führt. Ursache hierfür sind in erster Linie Fertigungstoleranzen der Zahnräder. In Ergebnis dessen kann ein Drehmomentenausgleich in der leistungsverzweigten Planetenstufe nicht befriedigend herbeigeführt werden.

Es ist daher die Aufgabe der vorliegenden Erfindung, ein gattungsgemäßes leistungsverzweigendes Getriebe dahingehend weiterzubilden, daß bei Kleinbau und geringer Masse auch ein korrekter Drehmomentenausgleich gewährleistet ist.

Die Erfindung wird ausgehend von einem Getriebe gemäß dem Oberbegriff der Ansprüche 1, 6, 9 in Verbindung mit dessen kennzeichnenden Merkmalen gelöst. Die abhängigen Ansprüche geben vorteilhafte Ausbildungsformen der Erfindung wieder.

Die Erfindung schließt die technische Lehre ein, daß den leistungsverzweigenden Planetengetrieben einer antriebsseitigen Planetenstufe eine Differentialgetriebestufe nachgeschaltet ist, um eine durch die Parallelschaltung auftretende ungleiche Lastaufteilung zwischen den einzelnen Planetengetrieben auszugleichen.

Vorzugsweise besteht die Planetenstufe aus genau zwei parallelgeschalteten und hintereinanderliegend angeordneten Planetengetrieben. Diese Anordnung gewährleistet einen effektiven Kraftflußverlauf bei einer überschaubaren Anzahl von Getriebeelementen.

Der Vorteil dieser Anordnung der Differentialgetriebestufe nach der antriebsseitigen Planetenstufe ermöglicht es, fertigungstoleranzbedingte Relativbewegungen von Getriebeelementen miteinander exakt auszugleichen. Die Differentialgetriebestufe kompensiert ein Drehmomentenungleichgewicht der vorzugsweise zwei abtriebsseitigen Wellen der Planetenstufe, um insoweit eine gleichmäßige Leistungsverzweigung zu erzielen. Somit kann bei kleinem Bauvolumen, das durch die parallelgeschalteten leistungsverzweigenden Planetengetriebe der antriebsseitigen Planetenstufe realisiert wird, auch ein Betrieb unter definierter Leistungsverzweigung erfolgen.

Eine die Erfindung verbessernde Maßnahme besteht darin, daß eine Sonnenwelle des ersten Planetengetriebes mit einer Sonnenwelle des zweiten Planetengetriebes eine koaxiale Hohlwellenanordnung bildet. Somit ist es möglich, auch die beiden Planetengetriebe der antriebsseitigen Planetenstufe koaxial anzuordnen und ihren Abtrieb ebenfalls koaxial und platzsparend über die jeweiligen Sonnenräder zu bewerkstelligen.

Die Abtriebswelle des Getriebes kann vorzugsweise über eine Stirnradgetriebestufe achsversetzt zur Antriebswelle angeordnet sein, um durch eine hohle Ausgestaltung der Antriebswelle Mittel zur Ansteuerung des Rotors zu führen.

Bei einer ersten bevorzugten Ausführungsform der Erfindung wie beansprucht in Anspruch 1, ist die Differentialgetriebestufe als sogenanntes "passives Differential" in Form eines Ausgleichsplanetengetriebes ausgebildet. Das Ausgleichsplanetengetriebe führt eine gleichmäßige Leistungsverzweigung auf die beiden angeschlossenen Sonnenwellen der aus gleichdimensionierten Planetengetrieben bestehenden symmetrisch aufgebauten Planetenstufe durch. Dabei steht die eine Sonnenwelle mit dem Sonnenrad und die andere Sonnenwelle mit dem Hohlrad der Differentialgetriebestufe in Wirkverbindung. Der Planetenträger bildet den Abtrieb. Hierbei kann die passive Differentialgetriebestufe entweder koaxial zu den Sonnenwellen oder über eine zwischengeschaltete Stirnradstufe achsversetzt zu den Sonnenwellen angeordnet sein. Das passive Differential in Form eines Ausgleichsplanetengetriebes dient ausschließlich dem Drehmomentenausgleich zwischen beiden Planetengetrieben der antriebsseitigen Planetenstufe. Da die beiden Planetengetriebe insoweit identisch aufgebaut sind, ist diese Ausführungsform hinsichtlich der Herstellung sowie der Ersatzteilhaltung günstig.

Bei einer zweiten bevorzugten Ausführungsform wie beansprucht in Anspruch 6, ist die Differentialgetriebestufe als sogenanntes "aktives Differential" in Form eines Ausgleichsplanetengetriebes ausgebildet. Das aktive Differential bewirkt einerseits eine gleichmäßige Leistungsverzweigung der beiden angeschlossenen Sonnenwellen der aus gleichdimensionierten Planetengetrieben bestehenden Planetenstufe; zum anderen wird die Differentialgetriebestufe durch eine asymmetrische Verschaltung der Planetengetriebe der Planetenstufe - wie nachfolgend eingehender erläutert - an der Gesamtübersetzung des Getriebes beteiligt. Weil das aktive Differential neben dem Drehmomentenausgleich ebenfalls an der Übersetzung des Getriebes beteiligt ist, ist eine im Vergleich zur ersten Ausführungsform kleinere Dimensionierung der ersten Planetenstufe möglich, um dasselbe Übersetzungsverhältnis im Getriebe zu realisieren. Ein weiterer Vorteil einer Funktionsintegration von Differential und Übersetzungsstufe ist es, dass weniger Getriebeelemente benötigt werden, so dass sich die Masse des Getriebes insgesamt verringert. Dieser Vorteil wird im Wesentlichen durch die asymmetrische Verschaltung der antriebsseitigen Planetenstufe erzielt.

Eine dritte Ausführungsform der Erfindung beansprucht in Anspruch 9, sieht vor, dass die Differentialgetriebestufe als passives Differential in Form einer axialweich gelagerten und entgegengesetzt schrägverzahnten Ausgleichsstirnradpaarung ausgebildet ist. Die Ausgleichsstirnradpaarung führt anstelle des Ausgleichsplanetengetriebes gemäß den beiden vorstehenden Ausführungsformen eine gleichmäßige Leistungsverzweigung über die beiden angeschlossenen Sonnenwellen der aus gleichdimensionierten Planetengetrieben bestehenden symmetrisch aufgebauten Planetenstufe herbei. Dabei steht die eine Sonnenwelle mit dem einen Ausgleichsstirnrad der Stirnradpaarung und die andere Sonnenwelle mit dem anderen Ausgleichstirnrad - mit entgegengesetzter Schrägverzahnung - in Wirkverbindung. Die flexible axiale Lagerung der Ausgleichsstimradpaarung kann vorzugsweise über eine koaxial zwischen der Ausgleichsstirnradpaarung und einem abtriebsseitigen und ebenfalls koaxialen Stirnrad angeordneten axialweichen Kupplung erfolgen. Die axialweiche Eigenschaft der Kupplung wird vorzugsweise über einen Elastomerkörper als Kupplungselement erzielt.

Weitere die Erfindung verbessernde Maßnahmen sind in den abhängigen Ansprüchen angegeben oder werden nachfolgend gemeinsam mit der Beschreibung der drei bevorzugten Ausführungsbeispieie der Erfindung anhand der Figuren näher dargestellt.

Es zeigt:
- Fig. 1: eine sinnbildliche Darstellung eines Getriebes mit passivem Differential in Form eines Ausgleichsplanetengetriebes in koaxialer Anordnung zur antriebsseitigen Planetenstufe als erste Ausführungsform,
- Fig. 2: eine sinnbildliche Darstellung eines Getriebes nach Figur 1, jedoch in achsversetzter Anordnung zur antriebsseitigen Planetenstufe,
- Fig. 3: eine Darstellung des Kraftflusses durch das Getriebe nach Figur 1 oder Figur 2 anhand der Wolfschen Symbolik,
- Fig. 4: eine sinnbildliche Darstellung eines Getriebes mit aktivem Differential in Form eines Ausgleichsplanetengetriebes als zweite Ausführungsform,
- Fig. 5: eine Darstellung des Kraftflusses durch das Getriebe nach Figur 4 anhand der Wolfschen Symbolik,
- Fig. 6: eine sinnbildliche Darstellung eines Getriebes mit aktivem Differential in Form einer Ausgleichsstimradpaarung in Kombination mit einer axialweichen Kupplung als dritte Ausführungsform.
- Fig. 7: eine Untervariante zu dem Ausführungsbeispiel nach Fig. 6

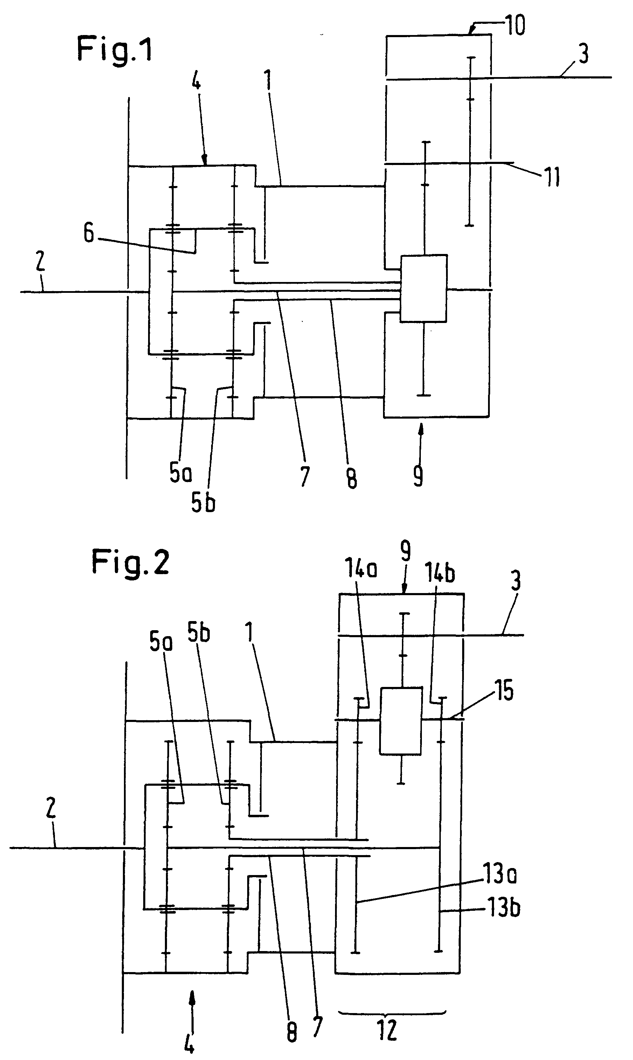

Das Getriebe gemäß Figur 1 weist eine in einem Gehäuse 1 drehend gelagerte Antriebswelle 2 auf, an der ein hier nicht dargestellter Rotor einer Windkraftanlage angebracht ist. Eine ebenfalls drehend im Gehäuse 1 gelagerte Abtriebswelle 3 stellt die Verbindung zu einem ebenfalls nicht weiter gezeigten Generator zur Erzeugung elektrischer Energie her. Die Antriebswelle 2 geht zu einer antriebsseitigen Planetenstufe 4. Die Planetenstufe 4 besteht aus zwei parallelgeschalteten Planetengetrieben 5a, 5b, die eine Leistungsverzweigung bewirken. Zu diesem Zweck besitzen beide Planetengetriebe 5a und 5b einen gemeinsamen Planetenträger 6, der mit der Antriebswelle 2 in Verbindung steht. Die beiden Planetengetriebe 5a und 5b sind identisch aufgebaut. Ihr Abtrieb wird durch eine Hohlwellenanordnung derart gebildet, dass eine Sonnenwelle 7 des ersten Planetengetriebes 5a innerhalb einer hohlen Sonnenwelle 8 des zweiten Planetengetriebes 5b verläuft. Beide Sonnenwellen 7 und 8 gehen eingangsseitig einer Differentialgetriebestufe 9 zu. Die Differentialgetriebestufe 9 ist in Form eines Planetengetriebes ausgebildet und dient dem Drehmomentenausgleich für die vorgeschaltete Planetenstufe 4. Im Sinne eines passiven Differentials wird dabei eine durch Fertigungstoleranzen bedingte Ungleichheit in der Leistungsverzweigung beider angeschlossener Sonnenwellen 7 und 8 ausgeglichen. Die symmetrische, d. h. aus identischen Getriebeelementen aufgebauten Planetengetriebe 5a und 5b können insoweit lastausgeglichen, d. h. mit optimaler Aufteilung des Leistungsflusses betrieben werden. Die eine Sonnenwelle 7 ist mit dem Sonnenrad und die andere Sonnenwelle 8 mit dem Hohlrad der Differentialgetriebestufe 9 verbunden, deren Planetenträger den Abtrieb bildet. Der Differentialgetriebestufe, die lediglich die Drehmomentenungleichheit für die Planetenstufe 4 ausgleicht, nimmt nicht an der Gesamtübersetzung des Getriebes teil. Zur weiteren Übersetzung ins Schnelle ist der Differentialgetriebestufe 9 eine weitere Stimradgetriebestufe 10 nachgeschaltet, die gleichsam eine achsversetzte Anordnung der Antriebswelle 3 zur Antriebswelle 2 gewährleistet.

In Figur 2 ist gemäß einer Untervariante die Differentialgetriebestufe 9 über eine zwischengeschaltete Stirnradstufe 12 achsversetzt zu den Sonnenwellen 7 und 8 angeordnet. Die zwischengeschaltete Stirnradstufe 12 besteht aus zwei nebeneinanderliegenden Stirnrädern 13a und 13b. Das Stirnrad 13a ist dabei mit der hohlen Sonnenwelle 8 und das Stirnrad 13b mit der anderen Sonnenwelle 7 verbunden. Beide Stirnräder 13a und 13b sind gleich dimensioniert und koaxial beabstandet zueinander angeordnet und stehen mit korrespondierenden Stirnrädern 14a und 14b, die auf einer gemeinsamen Zwischenwelle 15 angeordnet sind, im Eingriff. Zwischen den beiden Stirnrädern 14a und 14b ist die Differentialgetriebestufe 9 koaxial angeordnet. Dabei ist die eine Sonnenwelle 7 über die Paarung der Stirnräder 13a und 14a mit dem Sonnenrad der Differentialgetriebe-stufe 9 verbunden; die andere Sonnenwelle 8 ist über die Paarung der Stirnräder 13b und 14b mit dem Hohlrad der Differentialgetriebestufe 9 verbunden.

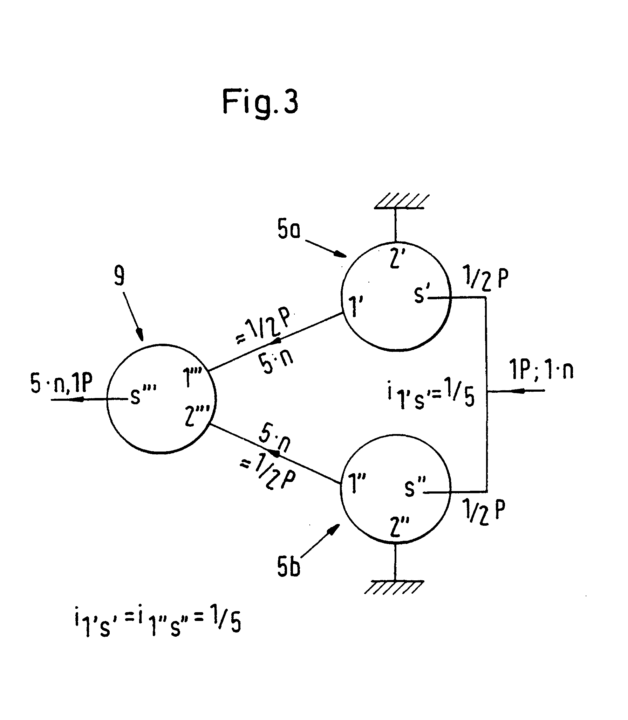

Die Figur 3 bedient sich zur Darstellung des Leistungsflusses innerhalb des Getriebes der Wolfschen Symbolik. Die Kreissymbole stellen bezogen auf das vorstehend beschriebene Ausführungsbeispiel die beteiligten Planetengetriebe wie folgt dar:
ein Strich - Planetengetriebe 5a
zwei Stiche - Planetengetriebe 5b
drei Stiche - Differentialgetriebestufe 9

Die Bezeichnungen innerhalb der Kreissymbole sind folgenden Anschlüssen eines Planetengetriebes zuzuordnen:
1 - Sonnenrad
2 - Hohlrad
s - Planetenträger

Aus dieser Symbolik geht die Funktionsweise des vorstehend beschriebenen Getriebes der ersten Ausführungsform hervor. Die antriebsseitige Leistung wird durch die parallel geschalteten Planetengetriebe 5a und 5b, welche insoweit die gleiche Drehzahl ausführen, hälftig verzweigt. Die nachgeschaltete Differentialgetriebestufe führt die verzweigte Leistung wieder zusammen, wobei innerhalb der parallelgeschalteten Planetengetriebe 5a und 5b eine Übersetzung von i / 5 ins Schnelle erfolgt ist. Diese Leistungsverzweigung gestattet es, die Planetengetriebe 5a und 5b mit geringerem Durchmesser zu dimensionieren, was auch die Masse des Getriebes insgesamt verringert.

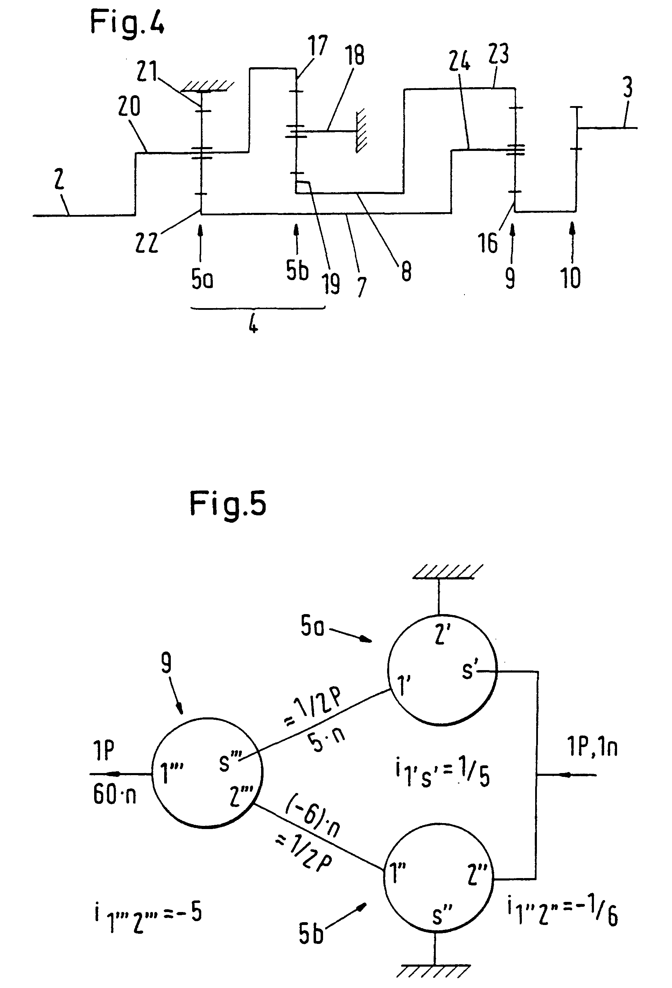

Der Halbschnitt von Figur 4 stellt gemäß der zweiten Ausführungsform der Erfindung ein Getriebe mit einem aktiven Differential, das ebenfalls in Form eines Planetengetriebes ausgebildet ist, dar. Die hierfür vorgesehene Differentialgetriebestufe 9 ist zwei gleichdimensionierten, d. h. eine in etwa hälftige Leistungsverzweigung vornehmenden Planetengetrieben 5a und 5b nachgeschaltet. Die beiden Planetengetriebe 5a und 5b, welche die mit der Antriebswelle 2 verbundene eingangsseitige Planetenstufe 4 bilden, sind jedoch im Unterschied zu dem vorstehend beschriebenen Ausführungsbeispiel asymmetrisch verschaltet. Damit gleicht die Differentialgetriebestufe 9 nicht allein die Drehmomentungleichheit der beiden angeschlossenen Sonnenwellen 7 und 8 aus, sondern nimmt - bedingt durch die asymmetrische Verschaltung der Planetenstufe 4 auch an der Gesamtübesetzung des Getriebes teil. Hierfür ist der Planetenträger 6 nicht beiden Planetengetrieben 5a und 5b gemeinsam. Die asymmetrische Verschaltung der Planetenstufe 4 mit der Differentialgetriebestufe 9 erfolgt im Einzelnen derart, dass bei dem Planetengetriebe 5b antriebsseitig das Hohlrad 17 bei gehäusefestem Planetenträger 18 und abtriebsseitigen Sonnenrad 19 angeordnet ist. Bei dem anderen Planetengetriebe 5a ist antriebsseitig der Planetenträger 20 bei gehäusefestem Hohlrad 21 und ebenfalls abtriebsseitigem Sonnenrad 22 angeordnet. Dabei steht das eine Sonnenrad 19 mit dem Hohlrad 23 der Differentialgetriebestufe 9 in Verbindung. Zur Transmission dient die hohle Sonnenwelle 8. Das andere Sonnenrad 22 der Planetenstufe 4 steht über die Sonnenwelle 7 mit dem Planetenträger 24 der Differentialgetriebestufe 9 in Verbindung. Schließlich wird abtriebsseitig über das Sonnenrad 16 der Differentialgetriebestufe 9 und der abtriebsseitigen Stirnradgetriebestufe 10 die übersetzte Leistung an die Abtriebswelle 3 gebracht.

Das vorstehend beschriebene Getriebe mit aktivem Differential besitzt gemäß Figur 5 ebenfalls die Funktionsweise einer Leistungsverzweigung durch die parallel geschalteten Planetengetriebe 5a und 5b der Planetenstufe 4. Wegen der vorstehend beschriebenen asymmetrischen Verschaltung der Planetengetriebe 5a und 5b entstehen hier entgegengesetzte ausgangsseitige Drehrichtungen. Die Drehzahlen sind im Vergleich zur Abtriebsdrehzahl ebenfalls unterschiedlich. Die Differentialgetriebestufe 9 nimmt jedoch durch diese Verschaltung an der Gesamtübersetzung des Getriebes teil. Insgesamt ist beispielsweise ein Übersetzungsverhältnis von 1 : 70 bei einer kleinen Anzahl von Getriebestufen, also wenigen Zahnrädern möglich, woraus wiederum eine geringere Masse resultiert.

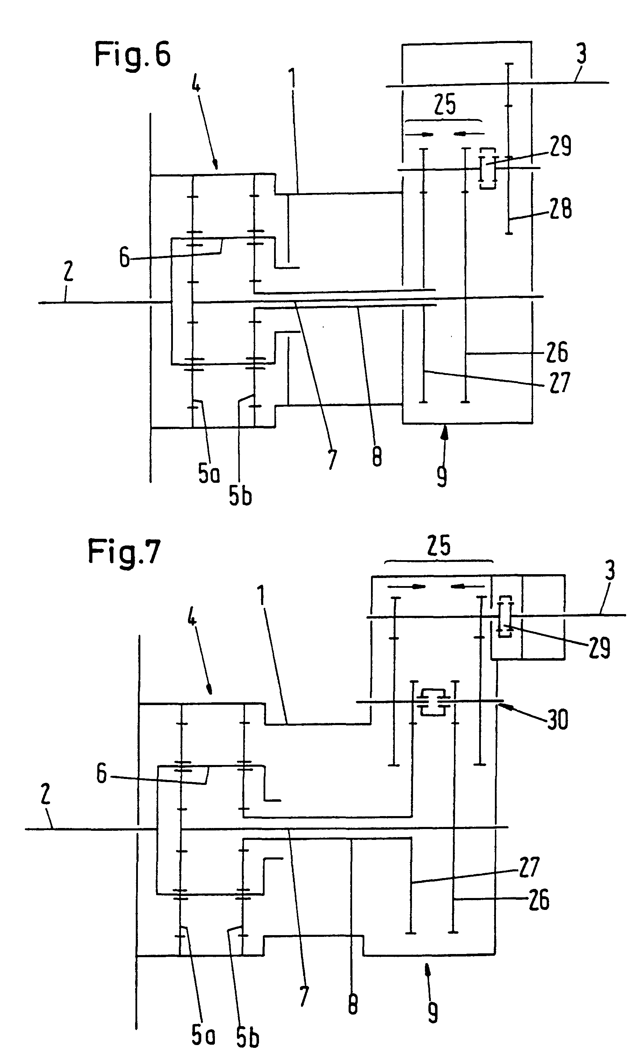

Das dritte Ausführungsbeispiel nach Figur 6 lehnt sich in seiner Konstruktion im Wesentlichen an das erste Ausführungsbeispiel an. Im Unterschied hierzu ist jedoch die Differentialgetriebestufe 9 als schrägverzahnte Ausgleichsstirnradpaarung 25 ausgebildet. Da die Ausgleichsstirnradpaarung 25 an der Gesamtübersetzung des Getriebes als Getriebestufe teil hat, ist diese Differentialgetriebestufe 9 als aktives Differential zu bezeichnen. Die Differentialgetriebefunktion führt die Ausgleichsstimradpaarung 25 durch eine entgegengesetzte Schrägverzahnung der beiden Stirnräder der Ausgleichsstirnradpaarung 25 aus, die mit einem auf der Sonnenwelle 7 befestigten Ausgleichsstimrad 26 und einem auf der anderen Sonnenwelle 8 befestigten Ausgleichsstirnrad 27 zusammenwirkt. Der Drehmomentenausgleich wird im Zusammenwirken der Ausgleichsstirnradpaarung 25 mit einer axialweichen Lagerung über eine koaxial zwischen der Ausgleichsstirnradpaarung 25 und einer abtriebsseitigen und ebenfalls koaxialen Stirnrad 28 angeordneten axialweichen Kupplung 29 realisiert. Die axialweiche Kupplung 29 gewährleistet somit einen lastausgleichenden Zahneingriff innerhalb der Ausgleichsstirnradpaarung 25 mit den Ausgleichsstirnrädern 26 und 27.

Bei einer Untervariante gemäß Figur 7 zu dem vorstehend beschriebenen dritten Ausführungsbeispiel ist zwischen den Ausgleichsstirnrädern 26 und 27 und der Ausgleichsstirnradpaarung 25 eine weitere Stirnradstufe 30 angeordnet. Die Stirnradstufe 30 dient einer weiteren Übersetzung ins Schnelle, um das Gesamtübersetzungsverhältnis des Getriebes insoweit zu vergrößern.

Die Erfindung beschränkt sich in ihrer Ausführung nicht allein auf die vorstehend angegebenen drei bevorzugten Ausführungsbeispiele mit ihren Untervarianten. Vielmehr ist eine Anzahl von Varianten denkbar, welche von der dargestellten Lösung auch bei grundsätzlich anders gearteten Ausführungen Gebrauch macht.

### Bezugszeichenliste

- **1**: Gehäuse
- **2**: Antriebswelle
- **3**: Abtriebswelle
- **4**: Planetenstufe
- **5**: Planetengetriebe
- **6**: Planetenträger
- **7**: Sonnenwelle
- **8**: Sonnenwelle, hohl
- **9**: Differentialgetriebestufe
- **10**: Stimradgetriebestufe
- **11**: Zwischenwelle
- **12**: Stimradstufe
- **13**: Stirnräder
- **14**: Stirnräder
- **15**: Zwischenwelle
- **16**: Sonnenrad
- **17**: Hohlrad
- **18**: Planetenträger
- **19**: Sonnenrad
- **20**: Planetenträger
- **21**: Hohlrad
- **22**: Sonnenrad
- **23**: Hohlrad
- **24**: Planetenträger
- **25**: Ausgleichsstirnradpaarung
- **26**: Ausgleichsstirnrad
- **27**: Ausgleichsstirnrad
- **28**: Stirnrad
- **29**: Kupplung
- **30**: Stirnradstufe

## Patentansprüche

1. Getriebe, insbesondere für Windkraftanlagen, bestehend aus einer antriebsseitigen symmetrisch aufgebauten Planetenstufe (4) der mindestens eine Getriebestufe nachgeschalten ist, wobei die Planetenstufe (4) aus mindestens zwei gleichdimensionierten parallelgeschaltenen leistungsverzweigenden Planetengetrieben (5a, 5b) besteht, wobei
den leistungsverzweigenden Planetengetrieben (5a, 5b) eine lastausgleichende Differentialgetriebestufe (9) nachgeschaltet ist, **dadurch gekennzeichnet, dass** die Differentialgetriebestufe (9) als passives Differential in Form eines Ausgleichsplanetengetriebes ausgebildet ist und eine gleichmäßige Leistungsverzweigung an den beiden angeschlossenen Sonnenwellen (7, 8) der aus den Planetengetrieben (5a, 5b) bestehenden Planetenstufe (4) ausführt, wobei die eine Sonnenwelle (7) mit dem Sonnenrad und die andere Sonnenwelle (8) mit dem Hohlrad der Differentialgetriebestufe (9) in Wirkverbindung steht, deren Planetenträger den Abtrieb bildet.

2. Getriebe nach Anspruch 1,
**dadurch gekennzeichnet, dass** zwischen der Antriebswelle (2) und der Abtriebswelle (3) eine stirnrädertragende Zwischenwelle (11) angeordnet ist.

3. Getriebe nach Anspruch 1,
**dadurch gekennzeichnet, dass** die passive Differentialgetriebestufe (9) koaxial zu den Sonnenwellen (7, 8) angeordnet ist.

4. Getriebe nach Anspruch 1,
**dadurch gekennzeichnet, dass** die passive Differentialgetriebestufe (9) über eine zwischengeschaltete Stirnradstufe (12) achsversetzt zu den Sonnenwellen (7, 8) angeordnet ist.

5. Getriebe nach Anspruch 4,
**dadurch gekennzeichnet, dass** die zwischengeschaltete Stirnradstufe (12) aus zwei koaxial zu den beiden Sonnenwellen (7, 8) angeordneten und je mit einer Sonnenwelle (7 bzw. 8) verbundenen nebeneinanderliegenden Stirnrädern (13a, 13b) gleichen Durchmessers besteht, die mit korrespondierenden Stirnrädern (14a, 14b) gleichen Durchmessers im Eingriff stehen, welche mit der koaxial zu den korrespondierenden Stirnrädern (14a, 14b) angeordneten Differentialgetriebestufe (9) entsprechend zusammenwirken.

6. Getriebe, insbesondere für Windkraftanlagen, bestehend aus einer antriebsseitigen Planetenstufe (4) der mindestens eine Getriebestufe nachgeschalten ist, wobei die Planetenstufe (4) aus zwei gleichdimensionierten parallelgeschaltenen leistungsverzweigenden Planetengetrieben (5a, 5b) besteht, wobei den leistungsverzweigenden Planetengetrieben (5a, 5b) eine lastausgleichende Differentialgetriebestufe (9) nachgeschaltet ist, **dadurch gekennzeichnet, dass** die Differentialgetriebestufe (9) als aktives Differential in Form eines Ausgleichsiplahetengetriebes ausgebildet ist und insoweit einerseits eine gleichmäßige Leistungsverzweigung an den beiden angeschlossenen Sonnenwellen (7, 8) der aus den Planetengetrieben (5a, b) bestehenden Planetenstufe (4) ausführt und andererseits durch asymmetrische Verschaltung der Planetenstufe (4) an der Gesamtübersetzung des Getriebes beteiligt ist, wobei das Sonnenrad (16) den Abtrieb bildet.

7. Getriebe nach Anspruch 6,
**dadurch gekennzeichnet, dass** der Differentialgetriebestufe (9) mindestens eine Stirnradgetriebestufe (10) nachgeschaltet ist.

8. Getriebe nach Anspruch 6,
**dadurch gekennzeichnet, dass** die asymmetrische Verschaltung der Planetenstufe (4) mit der Differentialgetriebestufe (9) derart erfolgt, daß bei dem ersten Planetengetriebe (5b) antriebsseitig das Hohlrad (17) bei gehäusefestem Planetenträger (18) und abtriebsseitigem Sonnenrad (19) angeordnet ist und bei dem zweiten Planetengetriebe (5a) antriebsseitig der Planetenträger (20) bei gehäusefestem Hohlrad (21) und ebenfalls abtriebsseitigem Sonnenrad (22) angeordnet ist, wobei das eine Sonnenrad (19) mit dem Hohlrad (23) der Differentialgetriebestufe (9) und das andere Sonnenrad (22) mit dessen Planetenträger (24) in Wirkverbindung steht.

9. Getriebe, insbesondere für Windkraftanlagen, bestehend aus einer antriebsseitigen symmetrisch aufgebauten Planetenstufe (4) der mindestens eine Getriebestufe nachgeschalten ist, wobei die Planetenstufe (4) aus mindestens zwei gleichdimensionierten parallelgeschaltenen leistungsverzweigenden Planetengetrieben (5a, 5b) besteht, wobei
den leistungsverzweigenden Planetengetrieben (5a, 5b) eine lastausgleichende Differentialgetriebestufe (9) nachgeschaltet ist, **dadurch gekennzeichnet, dass** die Differentialgetriebestufe (9) als aktives Differential in Form einer axialweich gelagerten und entgegengesetzt schrägverzahnten Ausgleichsstirnradpaarung (25) ausgebildet ist, die einerseits eine gleichmäßige Leistungsverzweigung an den beiden angeschlossenen Sonnenwellen (7, 8) der aus den Planetengetrieben (5a, 5b) bestehenden Planetenstufe (4) ausführt und die andererseits als Getriebestufe an der Gesamtübersetzung des Getriebes beteiligt ist, wobei die eine Sonnenwelle (7) mit dem einen Ausgleichsstirnrad (26) der Ausgleichsstirnradpaarung (25) und die andere Sonnenwelle (8) mit deren anderem Ausgleichsstimrad (27) in Wirkverbindung steht.

10. Getriebe nach Anspruch 9,
**dadurch gekennzeichnet, dass** die axialweiche Lagerung der Ausgleichsstirnradpaarung (25) über eine koaxial zwischen der Ausgleichsstirnradpaarung (25) und einem abtriebsseitigen und ebenfalls koaxialen Stirnrad (28) angordneten axialweichen Kupplung (29) erfolgt.

11. Getriebe nach Anspruch 9,
**dadurch gekennzeichnet, dass** die Ausgleichsstirnradpaarung (25) und die korrespondierenden mit je einer Sonnenwelle (7, 8) verbundene Ausgleichsstirnräder (26, 27) in einem Übersetzungsverhältnis ins Schnelle zueinander stehen.

12. Getriebe nach Anspruch 11,
**dadurch gekennzeichnet, dass** zwischen den Ausgleichsstimrädern (26, 27) und der Ausgleichsstirnradpaarung (25) eine weitere Stirnradstufe (30) mit einer Übersetzung ins Schnelle angeordnet ist.

13. Getriebe nach einem der vorstehenden Ansprüche,
**dadurch gekennzeichnet, dass** die Planetenstufe (4) aus genau zwei parallelgeschalteten und hintereinanderliegend angeordneten Planetengetrieben (5a, 5b) besteht.

14. Getriebe nach einem der vorstehenden Ansprüche,
**dadurch gekennzeichnet, dass** eine Sonnenwelle (7) des ersten Planetengetriebe (5a) mit einer Sonnenwelle (8) des zweiten Planetengetriebes (5b) eine koaxiale Hohlwellenanordnung bildet.

15. Getriebe nach einem der vorstehenden Ansprüche,
**dadurch gekennzeichnet, dass** die Planetenstufe (4) über einen gemeinsamen Planetenträger (6) mit einer Antriebswelle (2) in Verbindung steht.

16. Getriebe nach einem der vorstehenden Ansprüche,
**dadurch gekennzeichnet, dass** die Abtriebswelle (3) über eine Stirriradgetriebestufe (10) achsversetzt zur Antriebswelle (2) angeordnet ist.

## Claims

1. Gear transmission, in particular for wind power installations, comprising a symmetrically configured planetary stage (4) on the drive side connected downstream of at least one transmission stage, said planetary stage (4) comprising at least two torque-dividing, parallel-connected planetary gears (5a, 5b) of the same dimensions, wherein a load-compensating differential gear stage (9) is connected downstream of the torque-dividing planetary gears (5a, 5b), **characterised in that** the differential gear stage (9) is configured as a passive differential in the form of a differential planetary gear and performs a uniform torque division at the two connected sun shafts (7, 8) of the planetary stage (4) comprising the planetary gears (5a, 5b), wherein one sun shaft (7) is actively connected to the sun gear and the other sun shaft (8) is actively connected to the ring gear of the differential gear stage (9), the planet carrier thereof forming the output.

2. Gear transmission according to Claim 1, **characterised in that** a spur gear-carrying intermediate shaft (11) is disposed between the drive shaft (2) and the output shaft (3).

3. Gear transmission according to Claim 1, **characterised in that** the passive differential gear stage (9) is arranged coaxially to the sun shafts (7, 8).

4. Gear transmission according to Claim 1, **characterised in that** the passive differential gear stage (9) is arranged to be axially displaced relative to the sun shafts (7, 8) by means of an interposed spur gear stage (12).

5. Gear transmission according to Claim 4, **characterised in that** the interposed spur gear stage (12) comprises two adjacent spur gears (13a, 13b) of the same diameter, which are arranged coaxially to the two sun shafts (7, 8) and are each connected to a sun shaft (7 or 8) and which mesh with corresponding spur gears (14a, 14b) of the same diameter, which cooperate accordingly with the differential gear stage (9) arranged coaxially to the corresponding spur gears (14a, 14b).

6. Gear transmission, in particular for wind power installations, comprising a planetary stage (4) on the drive side connected downstream of at least one transmission stage, said planetary stage (4) comprising two torque-dividing, parallel-connected planetary gears (5a, 5b) of the same dimensions, wherein a load-compensating differential gear stage (9) is connected downstream of the torque-dividing planetary gears (5a, 5b), **characterised in that** the differential gear stage (9) is configured as an active differential in the form of a differential planetary gear and thus, on the one hand, performs a uniform torque division at the two connected sun shafts (7, 8) of the planetary stage (4) comprising the planetary gears (5a, b) and, on the other hand, participates in the total transmission ratio of the gear as a result of asymmetric switching of the planetary stage (4), wherein the sun gear (16) forms the output.

7. Gear transmission according to Claim 6, **characterised in that** at least one spur transmission stage (10) is connected downstream of the differential gear stage (9).

8. Gear transmission according to Claim 6, **characterised in that** the asymmetric switching of the planetary stage (4) to the differential gear stage (9) occurs in such a manner that in the case of the first planetary gear (5b) on the drive side the internal gear (17) is disposed with the planet carrier (18) fixed in the casing and the sun gear (19) on the output side and in the case of the second planetary gear (5a) the planet carrier (20) is disposed on the drive side with the ring gear (21) fixed in the casing and sun gear (22) likewise on the output side, wherein one sun gear (19) is actively connected to the internal gear (23) of the differential gear stage (9) and the other sun gear (22) is operatively connected to the planet carrier (24) thereof.

9. Gear transmission, in particular for wind power installations, comprising a symmetrically configured planetary stage (4) on the drive side connected downstream of at least one transmission stage, said planetary stage (4) comprising at least two torque-dividing, parallel-connected planetary gears (5a, 5b) of the same dimensions, wherein a load-compensating differential gear stage (9) is connected downstream of the torque-dividing planetary gears (5a, 5b), **characterised in that** the differential gear stage (9) is configured as an active differential in the form of a compensating spur gear pair (25) which is arranged to be axially non rigid and helically geared in opposed manner and which, on the one hand, performs a uniform torque division at the two connected sun shafts (7, 8) of the planetary stage (4) comprising the planetary gears (5a, 5b) and, on the other hand, participates as transmission stage in the total transmission ratio of the gear, wherein one sun shaft (7) is actively connected to one compensating spur gear (26) of the compensating spur gear pair (25) and the other sun shaft (8) is operatively connected to the other compensating spur gear (27) thereof.

10. Gear transmission according to Claim 9, **characterised in that** the axially soft mounting of the compensating spur gear pair (25) is achieved via an axially non rigid coupling (29) arranged coaxially between the compensating spur gear pair (25) and a likewise coaxial spur gear (28) on the output side.

11. Gear transmission according to Claim 9, **characterised in that** the compensating spur gear pair (25) and the corresponding compensating spur gears (26, 27) each connected to a sun shaft (7, 8) stand at a speed increasing ratio relative to one another.

12. Gear transmission according to Claim 11, **characterised in that** a further spur gear stage (30) with a speed increasing ratio is disposed between the compensating spur gears (26, 27) and the compensating spur gear pair (25).

13. Gear transmission according to one of the preceding claims, **characterised in that** the planetary stage (4) comprises exactly two parallel-connected planetary gears (5a, 5b) arranged to lie one behind the other.

14. Gear transmission according to one of the preceding claims, **characterised in that** a sun shaft (7) of the first planetary gear (5a) forms a coaxial hollow shaft arrangement with a sun shaft (8) of the second planetary gear (5b).

15. Gear transmission according to one of the preceding claims, **characterised in that** the planetary stage (4) connects to a drive shaft (2) via a common planet carrier (6).

16. Transmission according to one of the preceding claims, **characterised in that** the output shaft (3) is arranged to be axially displaced relative to the drive shaft (2) by means of a spur gear stage (10).

## Revendications

1. Mécanisme de transmission, en particulier pour des génératrices éoliennes, constitué par un étage planétaire (4) à structure symétrique côté transmission, à la suite duquel est monté au moins un étage de transmission, dans lequel l'étage planétaire (4) est constitué par au moins deux engrenages planétaires (5a, 5b) de même dimension, montés en parallèle et du type à branchement de couple, un étage de transmission différentielle (9) ayant pour effet de compenser la charge étant monté à la suite des engrenages planétaires (5a, 5b) du type à branchement de couple, **caractérisé en ce que** l'étage de transmission différentielle (9) est réalisé, à titre de différentiel passif, sous la forme d'un engrenage planétaire de compensation et met en oeuvre un branchement de couple uniforme aux deux arbres solaires raccordés (7, 8) de l'étage planétaire (4) constitué par les engrenages planétaires (5a, 5b), le premier arbre solaire (7) étant disposé en liaison de travail avec la roue solaire et l'autre arbre solaire (8) étant disposé en liaison de travail avec la couronne planétaire de l'étage de transmission différentielle (9), dont le support planétaire forme la sortie.

2. Mécanisme de transmission selon la revendication 1, **caractérisé en ce qu'**un arbre intermédiaire (11) portant des pignons droits est disposé entre l'arbre de transmission (2) et l'arbre de sortie (3).

3. Mécanisme de transmission selon la revendication 1, **caractérisé en ce que** l'étage de différentiel passif (9) est disposé en position coaxiale par rapport aux arbres solaires (7, 8).

4. Mécanisme de transmission selon la revendication 1, **caractérisé en ce que** l'étage de différentiel passif (9) est disposé, via un étage de pignon droit intercalé (12), en déport axial par rapport aux arbres solaires (7, 8).

5. Mécanisme de transmission selon la revendication 4, **caractérisé en ce que** l'étage de pignon droit intercalé (12) est constitué par deux pignons droits (13a, 13b) adjacents de même diamètre qui sont reliés respectivement à un arbre solaire (7, respectivement 8) et qui sont disposés en position coaxiale par rapport aux deux arbres solaires (7, 8), lesdits pignons étant disposés en entraînement avec des pignons droits correspondants (14a, 14b) de même diamètre qui coopèrent de manière correspondante avec l'étage de transmission différentielle (9) disposé en position coaxiale par rapport aux deux pignons droits correspondants (14a, 14b).

6. Mécanisme de transmission, en particulier pour des génératrices éoliennes, constitué par un étage planétaire (4) à structure symétrique côté transmission, à la suite duquel est monté au moins un étage de transmission, dans lequel l'étage planétaire (4) est constitué par au moins deux engrenages planétaires (Sa, 5b) de même dimension, montés en parallèle et du type à branchement de couple, un étage de transmission différentielle (9) ayant pour effet de compenser la charge étant monté à la suite des engrenages planétaires (5a, 5b) du type à branchement de couple, **caractérisé en ce que** l'étage de transmission différentielle (9) est réalisé, à titre de différentiel actif, sous la forme d'un engrenage planétaire de compensation et, dans cette mesure, met en oeuvre d'une part un branchement de couple uniforme aux deux arbres solaires raccordés (7, 8) de l'étage planétaire (4) constitué par les engrenages planétaires (5a, 5b) et d'autre part, par montage asymétrique de l'étage planétaire (4), prend une part active dans la transmission globale de l'engrenage, la roue solaire (16) formant la sortie.

7. Mécanisme de transmission selon la revendication 6, **caractérisé en ce qu'**au moins un étage de transmission (10) du type à pignon droit est monté à la suite de l'étage de transmission différentielle (9).

8. Mécanisme de transmission selon la revendication 6, **caractérisé en ce que** le montage asymétrique de l'étage planétaire (4) avec l'étage de transmission différentielle (9) a lieu de telle sorte que, en ce qui concerne le premier engrenage planétaire (5b), côté transmission, l'engrenage planétaire (17) est disposé près du support planétaire (18) monté à demeure sur le bâti et près de la roue solaire (19) montée côté sortie, et en ce qui concerne le deuxième engrenage planétaire (5b), côté transmission, le support planétaire (20) est disposé près de l'engrenage planétaire (21) monté à demeure sur le bâti et également près de la roue solaire (22) montée côté sortie, la première roue solaire (19) est disposée en liaison de travail avec l'engrenage planétaire (23) de l'étage de transmission différentielle (9) et l'autre roue solaire (22) est disposée en liaison de travail avec le support planétaire (24) de l'étage précité.

9. Mécanisme de transmission, en particulier pour des génératrices éoliennes, constitué par un étage planétaire (4) à structure symétrique côté transmission, à la suite duquel est monté au moins un étage de transmission, dans lequel l'étage planétaire (4) est constitué par au moins deux engrenages planétaires (5a, 5b) de même dimension, montés en parallèle et du type à branchement de couple, un étage de transmission différentielle (9) ayant pour effet de compenser la charge étant monté à la suite des engrenages planétaires (5a, 5b) du type à branchement de couple, **caractérisé en ce que** l'étage de transmission différentielle (9) est réalisé, à titre de différentiel actif, sous la forme d'une paire de pignons droits de compensation (25) du type à montage non rigide en direction axiale et à l'opposé du type à denture hélicoïdale, qui met en oeuvre d'une part un branchement de couple uniforme aux deux arbres solaires raccordés (7, 8) de l'étage planétaire (4) constitué par les engrenages planétaires (5a, 5b) et d'autre part, à titre d'étage de transmission, prend une part active dans la transmission globale de l'engrenage, le premier arbre solaire (7) étant disposé en liaison de travail avec le premier pignon droit de compensation (26) de la paire de pignons droits de compensation (25) et l'autre arbre solaire (8) étant disposé en liaison de travail avec l'autre pignon droit de compensation (27).

10. Mécanisme de transmission selon la revendication 9, **caractérisé en ce que** le montage non rigide de la paire de pignons droits de compensation (25) en direction axiale a lieu via un accouplement (29) non rigide en direction axiale disposé en position coaxiale entre la paire de pignons droits de compensation (25) et un pignon droit (28) monté côté sortie et également en position coaxiale.

11. Mécanisme de transmission selon la revendication 9, **caractérisé en ce que** la paire de pignons droits de compensation (25) et les pignons droits de compensation (26, 27) correspondant reliés respectivement à un arbre solaire (7, 8), sont disposés les uns par rapport aux autres dans une multiplication par engrenage.

12. Mécanisme de transmission selon la revendication 11, **caractérisé en ce qu'**un étage supplémentaire (30) sous la forme d'un pignon droit est disposé dans une multiplication par engrenage entre les pignons droits de compensation (26, 27) et la paire de pignons droits de compensation (25).

13. Mécanisme de transmission selon l'une quelconque des revendications précédentes, **caractérisé en ce que** l'étage planétaire (4) est constitué précisément par deux engrenages planétaires (5a, 5b) montés en parallèle et disposés l'un derrière l'autre.

14. Mécanisme de transmission selon l'une quelconque des revendications précédentes, **caractérisé en ce qu'**un arbre solaire (7) du premier engrenage planétaire (5a) forme un agencement d'arbres creux coaxial avec un arbre solaire (8) du deuxième engrenage planétaire (5b).

15. Mécanisme de transmission selon l'une quelconque des revendications précédentes, **caractérisé en ce que** l'étage planétaire (4) est relié par l'intermédiaire d'un support planétaire (6) commun avec un arbre de transmission (2).

16. Mécanisme de transmission selon l'une quelconque des revendications précédentes, **caractérisé en ce que** l'arbre de sortie (3) est décalé de l'axe de l'arbre de transmission (2) par un étage de transmission en forme de pignon droit (10).
